# EUROPEAN PATENT APPLICATION

(11) **EP 4 527 265 A1**
(43) Date of publication of application: **26.03.2025**
(21) Application number: 24201761.4
(22) Date of filing: 20.09.2024
(51) Int. Cl.: A47J 37/12

(54) **OIL FILTRATION AND STERILIZATION SYSTEM AND CONTROL METHOD THEREOF**

(30) Priority: 25.09.2023 TW 112136637
(71) Applicant: Lien, Shu-Ting, Taichung City 420 (TW); Chang, Yu-Shu, Taichung City 420 (TW)
(72) Inventor: LIEN, Shu-Ting, 420 Taichung City (TW)
(74) Representative: Page White Farrer

(57) **Abstract**

An oil filtration and sterilization system includes a fryer unit (1) having a housing (11) that defines a frying tank (111) for containing cooking oil, an oil filter unit (2), and a motor unit (3). The oil filter unit (2) includes an oil filter container (21) defining a receiving space (211), a small pore size filter screen (22) dividing the receiving space (211) into lower and upper spaces, and a large pore size filter screen (23) disposed in the upper space. The lower space is configured to receive the cooking oil filtered by the filter screens (23, 22). The motor unit (3) includes a pump motor (32), and a conduit (31) communicating with the receiving space (211) and the frying tank (111). The pump motor (32) is activated to pump the cooking oil in the receiving space (211) back into the frying tank (111) through the conduit (31). A sterilization unit (4) is provided to sterilize the cooking oil flowing back into the frying tank (111).

## Description

The present disclosure relates to an oil filtration system, and more particularly to an oil filtration and sterilization system and a control method thereof.

Currently, companies selling fried food mostly use an existing fryer for frying food. The fryer has a frying tank for containing cooking oil, a discharge port communicating with the frying tank, and a heating source for heating the cooking oil inside the frying tank. However, the frying of food often produces a large amount of fried scraps, and if not immediately removed, the quality of the cooking oil will easily deteriorate, resulting in oily smell in the fried food or production of carcinogens. The method for removing the fried scraps is by using a long-handled skimmer, or an oil filter paper with chemical composition to manually fish and filter, or to add oil filter powder into the frying tank to precipitate the fried scraps.

Furthermore, the use of manual fishing of the fried scraps is not efficient. It can only fish out a small amount of the fried scraps, and cannot fish out finer fried scraps, thereby still causing the quality of the cooking oil to deteriorate. In addition, after adding the oil filter powder, there is still a need to manually drain all the cooking oil, and then clean up the precipitated fried scraps, such as using water to rinse the frying tank. However, such cleaning method will increase the operating time and thus the cost, so that there is still a need to improve the efficiency thereof. Moreover, by adding the oil filter powder or using the oil filter paper in the cooking oil will inevitably cause concerns whether chemical substances will remain in the cooking oil, and repeated use may affect human health. Apparently, there is still room for improvement of the existing oil filtering method.

Therefore, an object of the present disclosure is to provide an oil filtration and sterilization system that can alleviate at least one of the drawbacks of the prior art and a control method thereof.

According to one aspect of this disclosure, there is provided an oil filtration and sterilization system suitable for filtering cooking oil according to claim 1.

According to another aspect of this disclosure, there is provided a control method of the oil filtration and sterilization system according to claim 7.

Other features and advantages of the disclosure will become apparent in the following detailed description of the embodiment with reference to the accompanying drawings. It is noted that various features may not be drawn to scale.
FIG. 1 is a partial exploded perspective view of an oil filtration and sterilization system according to an embodiment of the present disclosure.
FIG. 2 is a perspective view illustrating a relative relationship between a fryer unit and a storage unit of the embodiment.
FIG. 3 is a perspective view illustrating a relative relationship between an oil filter unit and a motor unit of the embodiment.
FIG. 4 is a partial exploded perspective view of FIG. 3.
FIG. 5 is a flow chart of a control method of the oil filtration and sterilization system of the embodiment.

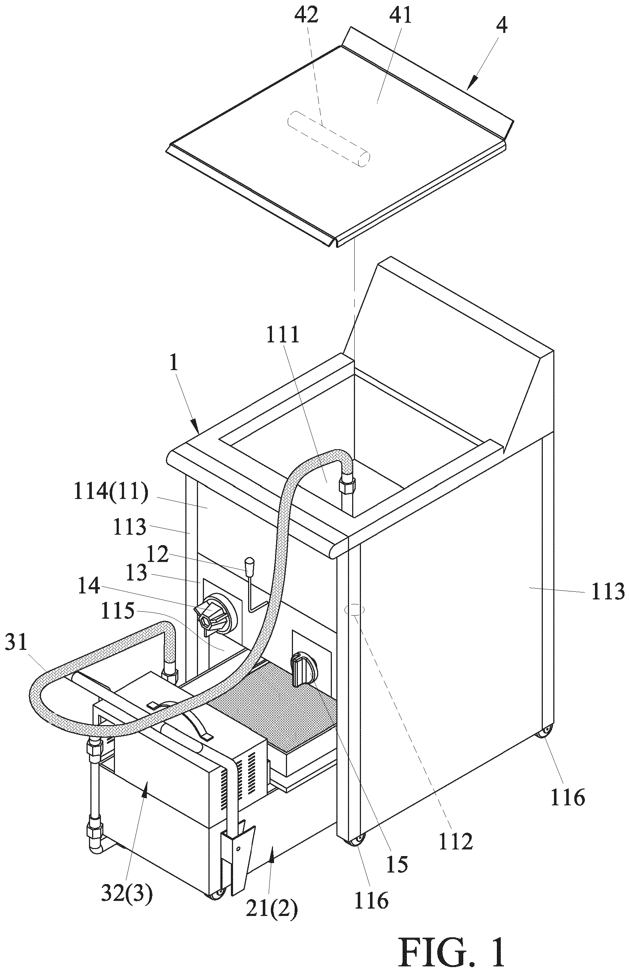

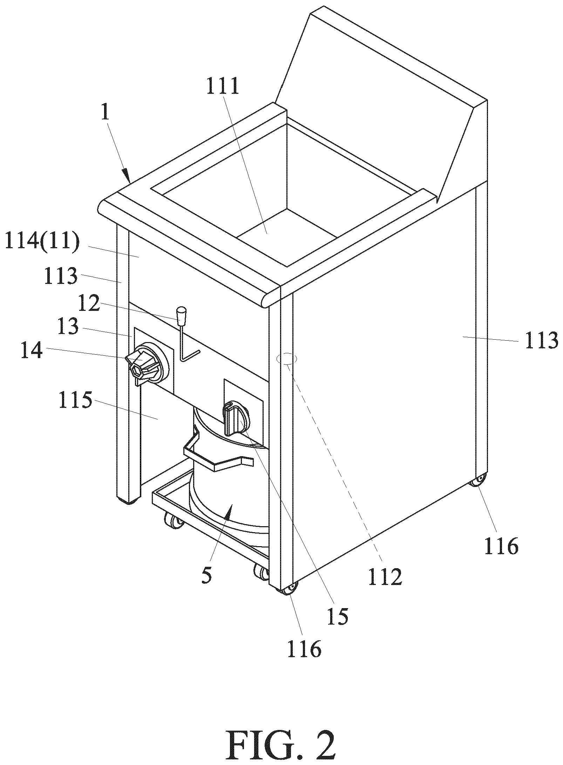

Referring to FIGS. 1 and 2, an oil filtration and sterilization system according to an embodiment of the present disclosure is suitable for filtering cooking oil (not shown), and includes a fryer unit 1, an oil filter unit 2, a motor unit 3 and a sterilization unit 4.

The fryer unit 1 includes a housing 11 defining a frying tank 111 and a discharge port 112 communicating with the frying tank 111, a discharge valve 12 corresponding in position to the discharge port 112 and used for opening or closing the discharge port 112, a heating source 13 for heating the frying tank 111, a temperature control knob 14 mounted on the housing 11 for adjusting an output temperature of the heating source 13, and a switch knob 15 mounted on the housing 11 for turning the heating source 13 on and off. In this embodiment, the heating source 13 is a gas combustion heater.

The housing 11 has two spaced-apart side plates 113, a main housing body 114 connected between the side plates 113 and spaced apart from bottom surfaces of the side plates 113 in a top-bottom direction by a limited height, and a plurality of spaced-apart housing rollers 116 disposed on the bottom surfaces of the side plates 113. The frying tank 111 is formed by recessing a top surface of the main housing body 114 toward a bottom surface thereof, and is used for containing the cooking oil. The discharge port 112 is formed in the bottom surface of the main housing body 114, and communicates with the frying tank 111. The bottom surface of the main housing body 114 and the side plates 113 cooperatively define an accommodating space 115 located below the frying tank 111 for accommodating the oil filter unit 2 and the motor unit 3. In this embodiment, the number of the housing rollers 116 is four.

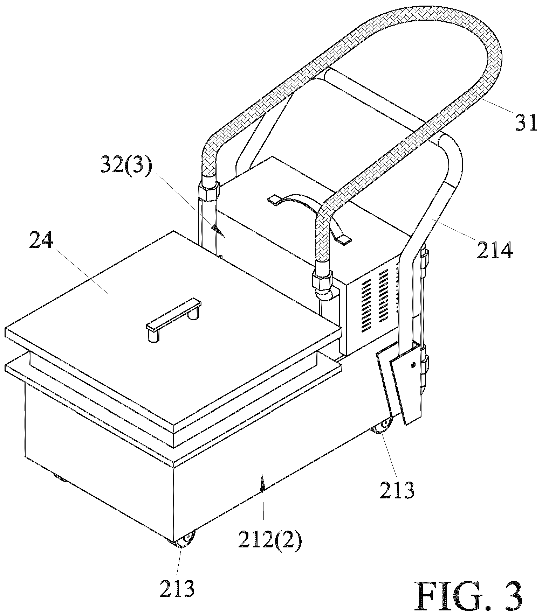

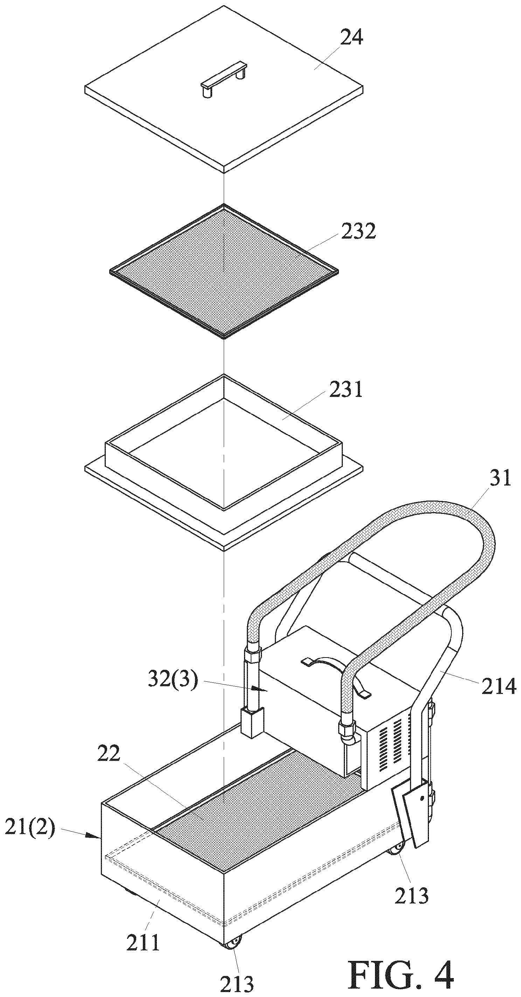

Referring to FIGS. 3 and 4, in combination with FIG. 1, the oil filter unit 2 includes an oil filter container 21 defining a receiving space 211 and used for aligning with the discharge port 112, a small pore size filter screen 22 removably disposed in the receiving space 211 and dividing the same into a lower space and an upper space, a large pore size filter screen 23 removably disposed in the upper space of the receiving space 211 and spaced apart from the small pore size filter screen 22, and a container lid 24. If storage of the oil filter unit 2 is required, the container lid 24 is disposed on top of the oil filter container 21 to cover the large pore size filter screen 23.

The oil filter container 21 has a container body 212 defining the receiving space 211, a plurality of spaced-apart container rollers 213 disposed on a bottom surface of the container body 212, and a handle 214 secured to the container body 212. The lower space of the receiving space 211 is configured to receive the cooking oil filtered by the large and small pore size filter screens 23, 22. In this embodiment, the number of the container rollers 213 is four.

In this embodiment, the mesh number of the small pore size filter screen 22 ranges from 240 to 260. The large pore size filter screen 23 has a hollow frame body 231 mounted on top of the container body 212, and a net body 232 disposed in the hollow frame body 231. In this embodiment, the mesh number of the large pore size filter screen 23 ranges from 110 to 130.

Referring back to FIGS. 1 and 4, the motor unit 3 includes a pump motor 32 disposed on the oil filter container 21, and a conduit 31 having a first end connected to the pump motor 32 and a second end opposite to the first end. The conduit 31 communicates with the receiving space 211 through the first end, and communicates with the frying tank 111 through the second end. The pump motor 32 is activated to pump the cooking oil filtered in the receiving space 211 back into the frying tank 111 through the conduit 31.

The sterilization unit 4 is configured to sterilize the cooking oil that flows back into the frying tank 111, and includes a top cover 41 for covering the frying tank 111, and an ultraviolet lamp 42 connected to the top cover 41 and facing the frying tank 111.

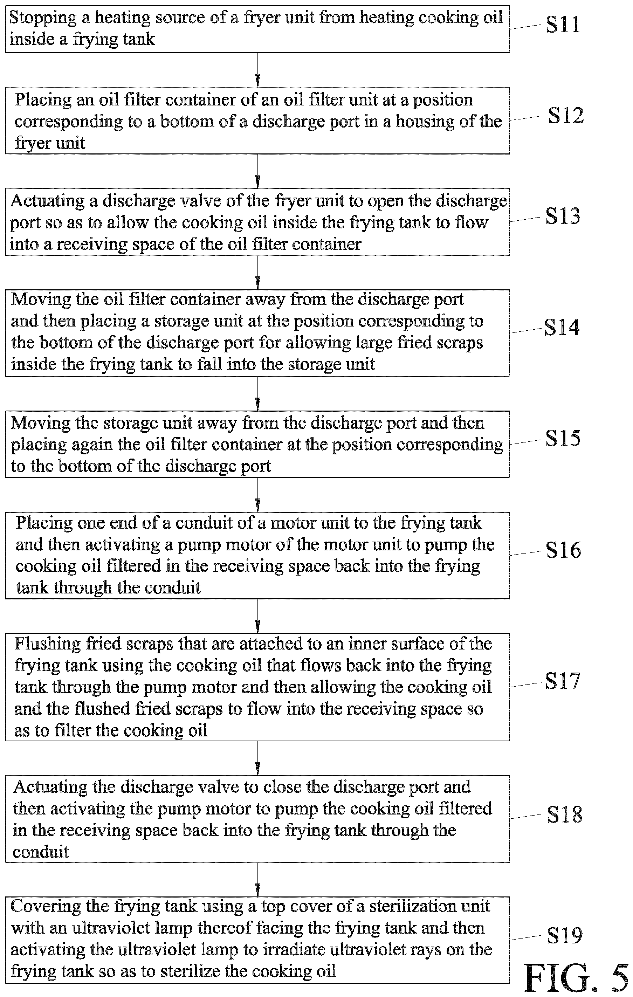

Referring to FIG. 5, in combination with FIGS. 1 to 4, a control method of the oil filtration and sterilization system of this embodiment is implemented in cooperation with the oil filtration and sterilization system and a storage unit 5 (see FIG. 2), and includes steps S11 to S19.

In step S11, the heating source 13 of the fryer unit 1 is stopped from heating the cooking oil in the frying tank 111 by operating the switch knob 15. At this time, the frying operation is completed, and not only the cooking oil remains in the frying tank 111, but also the corresponding fried scraps produced after frying.

In step S12, the oil filter container 21 of the oil filter unit 2 is placed at a position corresponding to a bottom the discharge port 112.

In step S13, the discharge valve 12 of the fryer unit 1 is actuated to open the discharge port 112 so as to allow the cooking oil heated inside the frying tank 111 to flow into the oil filter container 21 through the discharge port 112. The cooking oil passes through the large pore size filter screen 23 firstly, and then through the small pore size filter screen 22 into the lower space of the receiving space 211 to filter the cooking oil.

Specifically, after the discharge port 112 is opened by the discharge valve 12, most of the cooking oil remaining in the frying tank 111 can flow into the oil filter container 21 through the discharge port 112 to perform subsequent oil filtering operations. At this time, a certain proportion of fried scraps (about 20% of the total weight of all fried scraps) will flow through the discharge port 112 along with the cooking oil into the oil filter container 21.

In step S14, with reference to FIGS. 1, 2 and 5, the oil filter container 21 is moved away from the discharge port 112, and then the storage unit 5 is placed at a position corresponding to the bottom of the discharge port 112 so as to allow large fried scraps inside the frying tank 111 to fall into the storage unit 5 through the discharge port 112 due to their own weight.

In more detail, the fried scraps located in the frying tank 111 account for about 80% of the total weight of all fried scraps, and the large fried scraps falling into the storage unit 5 through the discharge port 112 due to their own weight account for about 70% of the total weight of all fried scraps. In other words, the fried scraps remaining in the frying tank 111 that are attached to an inner surface thereof account for about 10% of the total weight of all fried scraps.

In step S15, with reference to FIGS. 1, 2, 4 and 5, the storage unit 5 is moved away from the discharge port 112, and the oil filter container 21 is again placed at the position corresponding to the bottom of the discharge port 112.

In step S16, the second end of the conduit 31 is placed in the frying tank 111, after which the pump motor 32 is activated to pump the cooking oil filtered in the receiving space 211 back into the frying tank 111 through the conduit 31.

In step S17, the fried scraps that are attached to the inner surface of the frying tank 111 (about 10% of the total weight of all fried scraps) are flushed by the cooking oil that flows back into the frying tank 111 through the pump motor 32, thereby producing a flushing and cleaning effect. After the flushing is completed, the cooking oil and the flushed fried scraps are allowed to flow into the oil filter container 21 through the discharge port 112. The cooking oil passes through the large and small pore size filter screens 23, 22 to filter the cooking oil.

In step S18, the discharge valve 12 is actuated to close the discharge port 112, and then the pump motor 32 is activated to pump the cooking oil filtered in the receiving space 211 back into the frying tank 111 through the conduit 31.

In step S19, the top cover 41 of the sterilization unit 4 is disposed on the housing 11 of the fryer unit 1 to cover the frying tank 111 with the ultraviolet lamp 42 facing the frying tank 111. The ultraviolet lamp 42 is then activated to irradiate ultraviolet rays on the frying tank 111 so as to sterilize the cooking oil that flows back into the frying tank 111 through the pump motor 32. Thus, after the cooking oil in the frying tank 111 is completely filtered, it is continuously sterilized to extend the useful life thereof.

After actual testing, the daily frying operation lasts for an operation time which substantially ranges from 4 to 6 hours. After the frying operation is stopped, the cooking oil is first filtered by the oil filter unit 2 and is then sterilized by the sterilization unit 4 until the frying operation is resumed the next day. By filtering and sterilizing the cooking oil until the fourth day, the total polar compound content of the cooking oil is only 18%, which is lower than the internationally accepted standards (25%).

The oil filtration and sterilization system of this disclosure and the control method thereof have the following effects:
(1) By using the oil filter unit 2 to filter the cooking oil, physical filtration is used throughout the process to ensure that the filtered cooking oil has no concerns about chemical residues, allowing the consumers to eat healthily.
(2) By using the oil filter unit 2 to filter the cooking oil, and by using the sterilization unit 4 to sterilize the cooking oil that flows back into the frying tank 111 through the pump motor 32, the useful life of the cooking oil can be extended to thereby reduce costs for operators. Furthermore, fumes generated during the frying operation can be reduced, thereby improving the working environment.
(3) By using the oil filter unit 2 to filter the cooking oil, and by using the pump motor 32 to pump the cooking oil filtered in the receiving space 211 back into the frying tank 111 through the conduit 31 so as to flush the fried scraps that are attached to the inner surface of the frying tank 111, the difficulty of cleaning the frying tank 111 can be reduced, thereby significantly reducing the cleaning time and improving the operating efficiency of this disclosure.

Therefore, the object of this disclosure can indeed be achieved.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. An oil filtration and sterilization system suitable for filtering cooking oil comprising a fryer unit (1) that includes a housing (11) defining a frying tank (111) and a discharge port (112) communicating with said frying tank (111), and a heating source (13) for heating said frying tank (111), said frying tank (111) being configured to contain the cooking oil, said oil filtration and sterilization system **characterized by**:
said fryer unit (1) further including a discharge valve (12) corresponding in position to said discharge port (112) and used for opening or closing said discharge port (112);
an oil filter unit (2) including an oil filter container (21) that defines a receiving space (211) and that is used for aligning said discharge port (112), a small pore size filter screen (22) disposed in said receiving space (211) and dividing said receiving space (211) into a lower space and an upper space, and a large pore size filter screen (23) disposed in said upper space of said receiving space (211) and spaced apart from said small pore size filter screen (22), said lower space of said receiving space (211) being configured to receive the cooking oil filtered by said large pore size filter screen (23) and said small pore size filter screen (22);
a motor unit (3) including a pump motor (32), and a conduit (31) having a first end connected to the pump motor (32) and a second end opposite to the first end, said conduit (31) communicating with said receiving space (211) through said first end, and communicating with said frying tank (111) through said second end, said pump motor (32) being activated to pump the cooking oil in said receiving space (211) back into said frying tank (111) through said conduit (31); and
a sterilization unit (4) configured to sterilize the cooking oil that flows back into said frying tank (111).

2. The oil filtration and sterilization system as claimed in claim 1, wherein said sterilization unit (4) includes a top cover (41) for covering said frying tank (111), and an ultraviolet lamp (42) connected to said top cover (41) and facing said frying tank (111).

3. The oil filtration and sterilization system as claimed in any one of claims 1 and 2, wherein said housing (11) has two spaced-apart side plates (113), and a main housing body (114) connected between said side plates (113) and spaced apart from bottom surfaces of said side plates (113) in a top-bottom direction by a limited height, said frying tank (111) being formed by recessing a top surface of said main housing body (114) toward a bottom surface of said main housing body (114), said discharge port (112) being defined in said bottom surface of said main housing body (114) and communicating with said frying tank (111), said bottom surface of said main housing body (114) and said side plates (113) cooperatively defining an accommodating space (115) located below said frying tank (111) for accommodating said oil filter unit (2) and said motor unit (3) therein.

4. The oil filtration and sterilization system as claimed in claim 3, wherein said housing (11) further includes a plurality of spaced-apart housing rollers (116) disposed on said bottom surfaces of said side plates (113).

5. The oil filtration and sterilization system as claimed in any one of claims 1 to 4, wherein said oil filter container (21) has a container body (212), and a plurality of spaced-apart container rollers (213) disposed on a bottom surface of said container body (212).

6. The oil filtration and sterilization system as claimed in any one of claims 1 to 5, wherein the mesh number of said small pore size filter screen (22) ranges from 240 to 260, and the mesh number of said large pore size filter screen (23) ranges from 110 to 130.

7. A control method of an oil filtration and sterilization system implemented in cooperation with the oil filtration and sterilization system and a storage unit (5), the oil filtration and sterilization system including a fryer unit (1), an oil filter unit (2), and a motor unit (3), the fryer unit (1) including a housing (11) that defines a frying tank (111) and a discharge port (112) communicating with the frying tank (111), a discharge valve (12) corresponding in position to the discharge port (112), and a heating source (13) for heating the frying tank (111), the oil filter unit (2) including an oil filter container (21) that defines a receiving space (211), a small pore size filter screen (22) disposed in the receiving space (211) and dividing the receiving space (211) into a lower space and an upper space, and a large pore size filter screen (23) disposed in the upper space of the receiving space (211) and spaced apart from the small pore size filter screen (22), the motor unit (3) including a pump motor (32) disposed on the oil filter container (21), and a conduit (31) having a first end connected to the pump motor (32) and a second end opposite to the first end, the conduit (31) communicating with the receiving space (211) through the first end, and communicating with the frying tank (111) through the second end, the control method comprising the steps of:
A) placing the oil filter container (21) at a position corresponding to a bottom of the discharge port (112);
B) actuating the discharge valve (12) to open the discharge port (112) so as to allow the cooking oil heated inside the frying tank (111) to flow into the oil filter container (21) through the discharge port (112), the cooking oil passing through the large pore size filter screen (23) firstly and then through the small pore size filter screen (22) into the lower space of the receiving space (211) to filter the cooking oil;
C) moving the oil filter container (21) away from the discharge port (112), and then placing the storage unit (5) at a position corresponding to the bottom of the discharge port (112) for allowing large fried scraps inside the frying tank (111) to fall into the storage unit (5) through the discharge port (112) due to their own weight;
D) moving the storage unit (5) away from the discharge port (112), and then placing again the oil filter container (21) at a position corresponding to the bottom of the discharge port (112); and
E) placing the second end of the conduit (31) in the frying tank (111), and then activating the pump motor (32) to pump the cooking oil filtered in the receiving space (211) back into the frying tank (111) through the conduit (31).

8. The control method as claimed in claim 7, wherein the oil filtration and sterilization system further includes a sterilization unit (4), the sterilization unit (4) including a top cover (41), and an ultraviolet lamp (42) connected to the top cover (41), the control method further comprising the steps of:
F) flushing fried scraps that are attached to an inner surface of the frying tank (111) using the cooking oil that flows back into the frying tank (111) through the pump motor (32), and then allowing the cooking oil and the flushed fried scraps to flow into the oil filter container (21) through the discharge port (112), the cooking oil passing through the large pore size filter screen (23) and the small pore size filter screen (22) into the lower space of the receiving space (211) to filter the cooking oil;
G) actuating the discharge valve (12) to close the discharge port (112), and then activating the pump motor (32) to pump the cooking oil filtered in the receiving space (211) back into the frying tank (111) through the conduit (31); and
H) covering the frying tank (111) using the top cover (41) of the sterilization unit(4) with the ultraviolet lamp (42) facing the frying tank (111), and then activating the ultraviolet lamp (42) to irradiate ultraviolet rays on the frying tank (111) so as to sterilize the cooking oil that flows back into the frying tank (111) through the pump motor (32).
